# EUROPEAN PATENT APPLICATION

(11) **EP 3 266 650 A1**
(43) Date of publication of application: **10.01.2018**
(21) Application number: 16465517.7
(22) Date of filing: 07.07.2016
(51) Int. Cl.: B60N 3/06, B60N 2/02, G05G 1/01, B60K 26/02, B60T 7/06, G05G 1/60

(54) **MOTOR VEHICLE WITH AN ADJUSTABLE FOOT REST, AND METHOD FOR SETTING THE POSITION OF THE FOOT REST**

(71) Applicant: Continental Automotive GmbH, 30165 Hannover (DE)
(72) Inventor: Meissner, Claudiu, 300752 Timisoara (RO)

(57) **Abstract**

A motor vehicle for at least one occupant, having a driver's seat, a pedal system and having a foot rest, wherein the foot rest is arranged laterally adjacent to the pedal system, wherein the foot rest can be adjusted relative to the driver' s seat, wherein the distance between the foot rest and the driver's seat along the operating direction of the pedal system can be adjusted and/or the angle at which the foot rest is oriented in relation to the driver's seat can be adjusted. Method for setting the position of the foot rest.

## Description

### Technical field

The invention relates to a motor vehicle for at least one occupant, having a vehicle seat, a pedal system and having a foot rest, wherein the foot rest is arranged laterally adjacent to the pedal system. The invention also relates to a method for setting the position of the foot rest.

### Prior art

Good ergonomics are of great importance when designing and constructing motor vehicles. In addition to the suitable arrangement of operator control elements, great importance is placed, in particular, on the sitting position of the occupant. To this end, modern motor vehicles have, for example, seats which can be adjusted in a variety of ways. In addition, steering wheels which can be adjusted in the horizontal and vertical direction and of which the inclination can be adapted to a certain extent are also known. Furthermore, mechanically or electrically adjustable vehicle pedals are known, in particular in sports cars. In particular, the clutch pedal, the brake pedal and the accelerator pedal can be adjusted in such a way that the distance between the set of pedals and the seat of the driver can be changed.

One disadvantage of the apparatus in the prior art is, in particular, that no devices are provided which support an ergonomically optimized sitting position for the driver and in particular the left foot of said driver when said foot is not placed on one of the vehicle pedals.

Summary of the invention, object, solution, advantages

Therefore, the object of the present invention is to provide a motor vehicle which has a foot rest which can be adjusted in order to allow an ergonomically optimized sitting position. A further object of the present invention is to provide a method for adjusting the foot rest.

The object in respect of the motor vehicle is achieved by a motor vehicle having the features of claim 1.

One exemplary embodiment of the invention relates to a motor vehicle for at least one occupant, having a driver's seat, a pedal system and having a foot rest, wherein the foot rest is arranged laterally adjacent to the pedal system, wherein the foot rest can be adjusted relative to the driver's seat, wherein the distance between the foot rest and the driver's seat along the operating direction of the pedal system can be adjusted and/or the angle at which the foot rest is oriented in relation to the driver's seat can be adjusted.

The foot rest is preferably arranged laterally next to the clutch pedal if a clutch pedal is present. In motor vehicles with an automatic transmission or in electric vehicles which do not necessarily have a transmission, the foot rest can also be arranged adjacent to the brake pedal.

The operating direction means, in particular, the direction along which the driver exerts a force onto the pedals in order to move said pedals. Depending on the design of the mechanics of the pedal system, an arcuate curve for moving the pedals can also be produced in this case, as a result of which the direction of the force is variable depending on the degree of operation. In spite of this, the pedals of the pedal system are moved substantially along one direction, wherein this direction is approximately considered to be the operating direction.

In particular, the distance between the foot rest and the driver' s seat, which substantially defines the sitting position of the driver, can be adjusted, so that the driver can set a position of the foot rest which is individual to him and which is comfortable for him. The angle of inclination of the foot rest can also be adapted in order to allow comfortable positioning of the foot on the foot rest.

The foot rest is preferably of similar design to the pedals, wherein a sufficiently large resting surface for the foot of the driver is provided. The foot rest can be freely arranged in the foot well or on one of the walls which bound the foot well.

It is particularly advantageous when the distance between at least one of the pedals of the pedal system and the driver's seat can also be adjusted. This is advantageous since a greater degree of variability for the driver can be achieved overall.

It is also advantageous when the adjustment of the foot rest is coupled to the adjustment of the pedal system, wherein the foot rest and the pedal system can be adjusted in the same direction. The coupling is particularly advantageous since both the foot rest and the pedal system can be adjusted using only one adjustment mechanism. In general, it can be assumed that a driver who adjusts the pedal system also tends to adjust the foot rest since this allows the foot to be switched between one of the pedals and the foot rest more comfortably. The foot rest and the pedals of the pedal system are preferably at approximately the same distance away from the driver, so that said driver does not have to retract his foot to a great extent in order to switch between the pedals and the foot rest.

A preferred exemplary embodiment is characterized in that the foot rest can be adjusted independently of the pedal system. The adjustment which is independent of the pedal system is advantageous since individual adjustment of the foot rest is possible.

It is also preferred when the foot rest can be set depending on the setting of the driver's seat. Dependency on the setting of the driver's seat is advantageous since the setting of the driver's seat already provides a very precise prediction about the sitting position of the driver. Therefore, it is easier to set a position of the foot rest which is comfortable for the driver.

Furthermore, it is advantageous when that surface of the foot rest which faces the driver can be adjusted, wherein in particular the topography of the surface can be set. By virtue of adjusting the topography of that surface of the foot rest which faces the driver, it is possible to adapt to different shoes and feet. Furthermore, the roughness of the surface can be changed for example, as a result of which slipping can be prevented.

It is further advantageous when the foot rest can be adjusted multiaxially along at least two of three spatial directions. It is also expedient when the foot rest can be rotated about at least one of three spatial directions. This is advantageous in order to ensure particularly variable setting of the position of the foot rest.

Furthermore, it is advantageous when the foot rest is mechanically coupled to the pedal system, so that adjustment of the pedal system leads to identical adjustment of the foot rest. This is particularly advantageous in order to achieve simple and cost-effective setting of the pedal system and the foot rest. It is necessary to provide only one actuator unit in order to move both the pedal system and the foot rest.

Furthermore, it is expedient when the foot rest can be adjusted by an electromechanical actuator. An actuator of this kind is preferably distinguished in that it can be adjusted with a low level of energy expenditure and allows secured fixing of the pedal system and the foot rest in the prespecified position. Fixing is necessary since very high forces can sometimes act on the pedal system and also the foot rest in the event of different driving maneuvers and unintentional shifting of the pedal system may lead to a safety-critical situation.

The object in respect of the method is achieved by a method having the features of claim 11.

One exemplary embodiment of the invention relates to a method for setting a foot rest for a motor vehicle, wherein the sitting position of the driver is ascertained and the foot rest is automatically set on the basis of the evaluated sitting position.

This is advantageous since a variety of conclusions about the driver can already be drawn owing to the ascertained sitting position. In particular, a prediction can be made about the size of the driver. Therefore, a recommendation for a suitable positioning arrangement of the foot rest can be proposed to the driver by comparison with empirical values. A proposal of this kind can be output, for example, on a display unit. As an alternative, the foot rest can also be automatically positioned, wherein it is left to the driver to discard the automatically set position and to set a different position.

It is also preferred when the sitting position of the driver is ascertained by evaluating the seat setting of the driver's seat. The seat setting already provides a large number of indications of the size of the driver. In addition, conclusions in respect of whether the driver tends to assume a relatively comfortable sitting position or a sporty sitting position can also be drawn. The positioning of the foot rest and/or of the pedal system can be adapted depending on said conclusions.

Furthermore, it is expedient when the position of the foot rest is ascertained depending on the ascertained sitting position by comparison with a database, which is stored in a control system, being performed, wherein the database contains positioning arrangements for the foot rest which are prespecified for different sitting positions. Sitting positions and associated positions of the foot rest can be stored in various ways in a database. These datasets can be ascertained, for example, in studies and experiments. The database can also contain further positioning combinations which, for example in the case of identical sitting positions, propose different positioning arrangements of the foot rest depending on the extent of the sportiness of the driver or the desire of the driver for comfort.

It is also advantageous when the position and orientation of the foot rest is determined depending on a prespecification which is selected by the occupant. This is particularly advantageous when so-called memory functions are used, said memory functions storing a specific setting, which is prespecified by the driver or the vehicle, for different elements and reproducing said setting on request. Said settings include, in particular, the sitting position, the mirror setting, the positioning of the steering wheel and also the positioning of the pedal system and/or of the foot rest. In this way, the driver's seat, including the foot rest, can be matched quickly, easily and comfortably to different drivers.

Advantageous developments of the present invention are described in the dependent claims and in the following description of figures.

### Brief description of the drawings

The invention will be explained in detail below using an exemplary embodiment with reference to the drawing, in which:

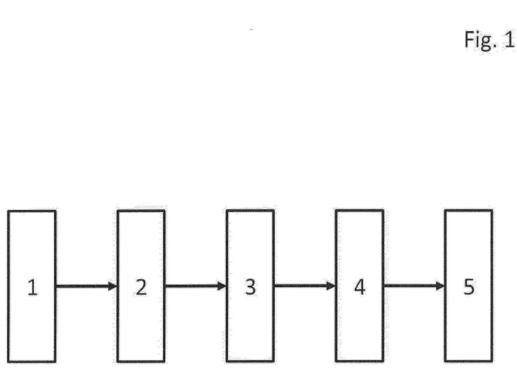

figure 1 shows a block diagram for illustrating the method according to the invention.

### Preferred embodiment of the invention

Figure 1 shows a block diagram for illustrating the method according to the invention. The sitting position is ascertained in block 1. In the case of electrically adjustable seats, this can be done, for example, by means of the central controller of the seat. In the case of mechanically adjustable seats, additional sensors which allow the sitting position to be detected can be used.

In block 2, the ascertained sitting position is compared with a database which is stored in a control unit. By way of example, a prespecified position for the foot rest is read out from said database. To this end, a large number of datasets can be stored in the database.

In block 3, the position, which is ascertained from the database, for the foot rest is finally transmitted to the foot rest by means of a suitable actuator, so that the foot rest is positioned in accordance with the prespecification from the database.

In block 4, the driver can finely adapt the position of the foot rest or select an entirely different position if he is not satisfied with the prespecification from the database.

Finally, block 5 shows a step in which a new combination of sitting position and position of the foot rest which has not previously been covered by the database is received in the database. This can take place automatically or be manually triggered by the driver.

Furthermore, it should be noted that features or steps which have been described with reference to one of the above exemplary embodiments can also be used in combination with other features or steps of other exemplary embodiments which have been described above.

## Claims

1. A motor vehicle for at least one occupant, having a driver' s seat, a pedal system and having a foot rest, wherein the foot rest is arranged laterally adjacent to the pedal system, **characterized in that** the foot rest can be adjusted relative to the driver's seat, wherein the distance between the foot rest and the driver's seat along the operating direction of the pedal system can be adjusted and/or the angle at which the foot rest is oriented in relation to the driver's seat can be adjusted.

2. The motor vehicle as claimed in claim 1, **characterized in that** the distance between at least one of the pedals of the pedal system and the driver's seat can also be adjusted.

3. The motor vehicle as claimed in either of the preceding claims, **characterized in that** the adjustment of the foot rest is coupled to the adjustment of the pedal system, wherein the foot rest and the pedal system can be adjusted in the same direction.

4. The motor vehicle as claimed in one of the preceding claims, **characterized in that** the foot rest can be adjusted independently of the pedal system.

5. The motor vehicle as claimed in one of the preceding claims, **characterized in that** the foot rest can be set depending on the setting of the driver's seat.

6. The motor vehicle as claimed in one of the preceding claims, **characterized in that** that surface of the foot rest which faces the driver can be adjusted, wherein in particular the topography of the surface can be set.

7. The motor vehicle as claimed in one of the preceding claims, **characterized in that** the foot rest can be adjusted multiaxially along at least two of three spatial directions.

8. The motor vehicle as claimed in one of the preceding claims, **characterized in that** the foot rest can be rotated about at least one of three spatial directions.

9. The motor vehicle as claimed in one of the preceding claims, **characterized in that** the foot rest is mechanically coupled to the pedal system, so that adjustment of the pedal system leads to identical adjustment of the foot rest.

10. The motor vehicle as claimed in one of the preceding claims, **characterized in that** the foot rest can be adjusted by an electromechanical actuator.

11. A method for setting a foot rest for a motor vehicle as claimed in one of the preceding claims, **characterized in that** the sitting position of the driver is ascertained and the foot rest is automatically set on the basis of the evaluated sitting position.

12. The method as claimed in claim 11, **characterized in that** the sitting position of the driver is ascertained by evaluating the seat setting of the driver's seat.

13. The method as claimed in either of the preceding claims 11 and 12, **characterized in that** the position of the foot rest is ascertained depending on the ascertained sitting position by comparison with a database, which is stored in a control system, being performed, wherein the database contains positioning arrangements for the foot rest which are prespecified for different sitting positions.

14. The method as claimed in one of the preceding claims 11 to 13, **characterized in that** the position and orientation of the foot rest is determined depending on a prespecification which is selected by the occupant.
